# EUROPEAN PATENT SPECIFICATION

(11) **EP 2 050 934 B1**
(45) Date of publication and mention of the grant of the patent: **06.01.2010**
(21) Application number: 07254169.1
(22) Date of filing: 19.10.2007
(51) Int. Cl.: F01L 1/344

(54) **Oil flow control valve for a cam phaser**
Öldurchflussregelventil für einen Nockenwellenversteller
Soupape de contrôle de débit d'huile pour synchronisateur de phase de cames

(43) Date of publication of application: 22.04.2009
(73) Proprietor: Delphi Technologies, Inc., Troy, Michigan 48007 (US)
(72) Inventor: Hamdi, Nordine, 4986 Sanem (LU)
(74) Representative: Robert, Vincent

(56) References cited:
- EP-A- 1 767 749
- DE-A1- 19 921 301
- GB-A- 737 678
- US-A- 4 024 798
- US-A- 5 700 136
- US-A1- 2006 027 773

## Description

The present invention relates to an oil flow control valve for a cam phaser, and in particular to an oil flow control valve having a check valve integrated therein.

Cam phasers are used to control the angular relationship of the pulley/sprocket to the camshaft of an engine. A variable cam phaser (VCP) allows adjustment of the phase relationship while the engine is running. Typically, a cam phaser is used to shift the intake cam on a dual overhead cam engine in order to broaden the torque curve of the engine, to increase peak power at high rpm, and to improve the idle quality. Also, the exhaust cam can be shifted by a cam phaser in order to provide internal charge diluent control, which can significantly reduce HC and NOx emissions, or to improve fuel economy.

Cam phasers are typically controlled by hydraulic systems, which use pressurized lubrication oil from the engine in order to change the relative position between camshaft and crankshaft, thus altering the valve timing. The advance or retard position of the camshaft is commanded via an oil flow control valve. The oil flow control valve (OCV in the following) controls the oil flow to different ports entering a cam phaser, thus controlling the angular position of the camshaft relative to pulley or sprocket. However, the pressure of the oil contained in the chambers of the cam phaser is affected by the motion of the valve train such that the oil pressure inside the cam phaser reaches peaks, which can be higher than the oil control supply pressure, i.e., the oil pressure supplied by the engine. This can lead to a certain amount of reverse oil flow across the OCV, diminishing the phase rate performance of the cam phasing system.

To avoid the reverse oil flow under the above mentioned circumstances, a check valve has been integrated in the oil passage of either the cylinder head or the crankcase. Such a check valve also ensures that the cam phaser does not empty out in cases when the oil pressure is reduced, for example when the engine is stopped. However, this approach adds significant cost to the cylinder head or engine block. Also, the implementation of the check valve can be difficult because of oil routing. Furthermore, the check valve should not be placed too far away from the cam phaser in order to be still effective.

EP 1 767 749 discloses an oil flow control valve wherein a check valve is integrated into the oil flow control valve. This reduces the need for a separate check valve in the cylinder head oil passageways, simplifying construction and assembly of the engine.

A problem with the oil flow control valve of EP 1767 749 is that the provision of a throughbore in the spool obviates the possibility of providing an axial throughbore through the centre of the spool and thus results in a closed fluid chamber between the spool and spool housing at at least one end of the spool. Leakage of oil into such closed chamber can lead to a hydraulic lock, preventing movement of the spool unless some way is found to vent or drain such closed chamber, possibly requiring further drillings and modification of the cylinder head or engine block.

According to a first aspect of the present invention there is provided an oil flow control valve for a cam phaser comprising a spool, a spool housing and a check valve, the spool having a transverse throughbore, the check valve being mounted in the spool housing to extend through said throughbore, the spool throughbore being of elongated shape to permit reciprocating movement of the spool within the spool housing between first and second positions, the spool housing being provided with a fluid inlet, associated with the checkvalve, and first and second fluid outlets located such that the transverse throughbore of the spool provides fluid communication between the fluid inlet and the first fluid outlet when the spool is in its first position and provides fluid communication between the fluid inlet and the second fluid outlet when the spool is in its second position, wherein at least one pressure balancing channel is provided in or between the spool and/or the spool housing to provide fluid communication between opposite first and second ends of the spool.

Preferably the pressure balancing channel comprises at least one axially extending bore extending through the spool between said first and second ends of the spool.

Alternatively the pressure balancing channel may comprise at least one elongate slot or groove formed in a side region of the spool to one side of the throughbore. Alternatively the pressure balancing channel may comprise at least one flat surface extending along the length of the spool along one side thereof.

Preferably the side faces of the spool surrounding the ends of the throughbore are a close sliding fit against the inner surface of the spool housing whereby the throughbore defines an oil chamber within which the check valve is located.

In one embodiment said first end of the spool housing communicates with a drain or low pressure region, said first fluid outlet being uncovered by the spool to communicate with said drain when the spool is in its second position, a recess or aperture being provided in a side region of the spool for communication with said second fluid outlet when the spool is in its first position. A drain channel may be provided in or between the spool and/or the spool housing to provide fluid communication between said recess or aperture and said first end of the spool and hence said drain. Preferably the drain channel comprises an elongate slot formed in a side face of the spool to one side of the spool throughbore. The pressure balancing channel may extend through or along the spool to one side of the spool throughbore on an opposite side to that provided with the drain channel.

Alternatively a further drain passage may be provided within the spool housing, said further drain passage communicating with the second fluid outlet via said recess or aperture of the spool when the spool is in its first position.

According to a second aspect of the present invention there is provided an oil flow control valve for a cam phaser comprising a spool, a spool housing and a check valve, the spool having a transverse throughbore, the check valve being mounted in the spool housing to extend through said throughbore, the spool throughbore being of elongated shape to permit reciprocating movement of the spool within the spool housing between first and second positions, the spool housing being provided with a fluid inlet, associated with the checkvalve, and first and second fluid outlets located such that the transverse throughbore of the spool provides fluid communication between the fluid inlet and the first fluid outlet when the spool is in its first position and provides fluid communication between the fluid inlet and the second fluid outlet when the spool is in its second position, said first end of the spool housing communicating with a drain or low pressure region, said first fluid outlet being uncovered by the spool to communicate with said drain when the spool is in its second position, a recess or aperture being provided in a side region of the spool for communication with said second fluid outlet when the spool is in its first position, characterised in that a drain channel is provided in or between the spool and/or the spool housing to provide fluid communication between said recess or aperture and said first end of the spool and hence said drain. Preferably the drain channel comprises an elongate slot formed in a side face of the spool to one side of the spool throughbore.

Preferred embodiments of the present invention will now be described with reference to the accompanying drawings, in which:-
Fig. 1 is a part sectional view of an oil flow control valve according to a first embodiment of the present invention;
Fig. 2 is an end view of the valve of Fig. 1;
Fig. 3 is a cross sectional view of the valve of Fig. 1;
Fig. 4 is an end view of a first version of the valve of Fig. 1;
Fig. 5 is an end view of a second version of the valve of Fig. 1;
Fig. 6 is an end view of a third version of the valve of Fig. 1; and
Fig. 7 is a part sectional view of an oil flow control valve according to a second embodiment of the present invention.

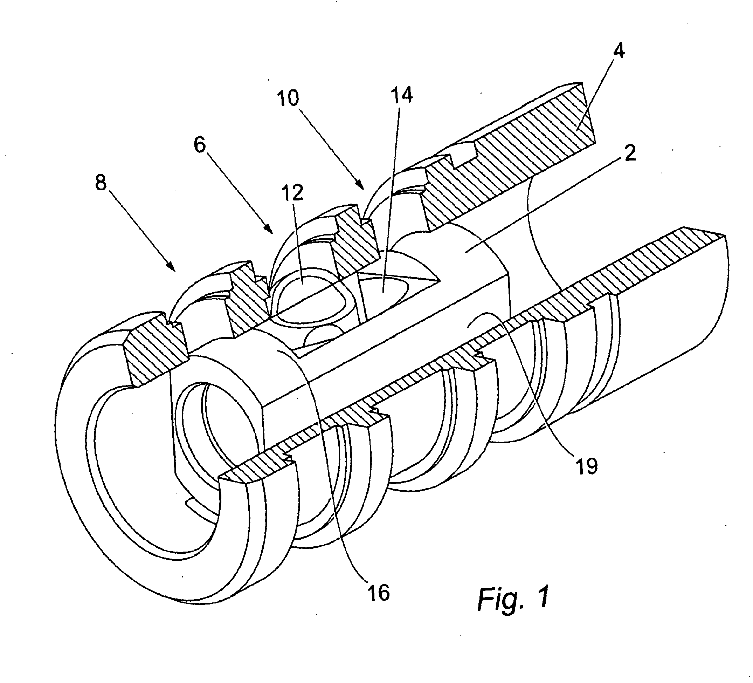

As illustrated in Figs. 1 to 6, an oil flow control valve according to a first embodiment of the present invention comprises a spool 2 slidably mounted within a spool housing 4. The spool housing 4 is provided with an inlet 6 connectable to a source of high pressure oil, such as an oil pump of an engine, and first and second outlets 8,10 positioned on either side of the inlet 6 for selectively supplying oil to a cam phaser for moving the cam phaser between advanced and retarded positions, as is well known in the art.

A check valve 12 is associated with the inlet 6 and mounted within the spool housing 4 whereby the check valve 12 extends through an elongate throughbore 14 in the spool 2. The throughbore 14 is of elongated shape to permit reciprocating movement of the spool 2 within the spool housing 4 between first and second positions. The check valve 12 is arranged to allow oil under pressure to pass from the inlet 6 into the throughbore 14 but to prevent the reverse flow of oil from the throughbore 14 into the inlet 6 and to maintain oil within the inlet 6 when the engine is switched off.

The surfaces 16,17 of the spool 2 surrounding the ends of the throughbore 14 are a sliding fit against the inner surface of the spool housing 4 such that the throughbore 14 defines a fluid chamber for controlling the flow of oil from the inlet 6 to either of the first and second outlets 8,10 depending upon the position of the spool 2 within the spool housing 4.

An actuator (not shown) acts on one end of the spool 2 to selectively move the spool 2 between its first and second positions.

In order to allow free movement of the spool 2 within the spool housing 4, a pressure balancing passage is provided along the length of the spool 2 to provide fluid communication between the ends of the spool.

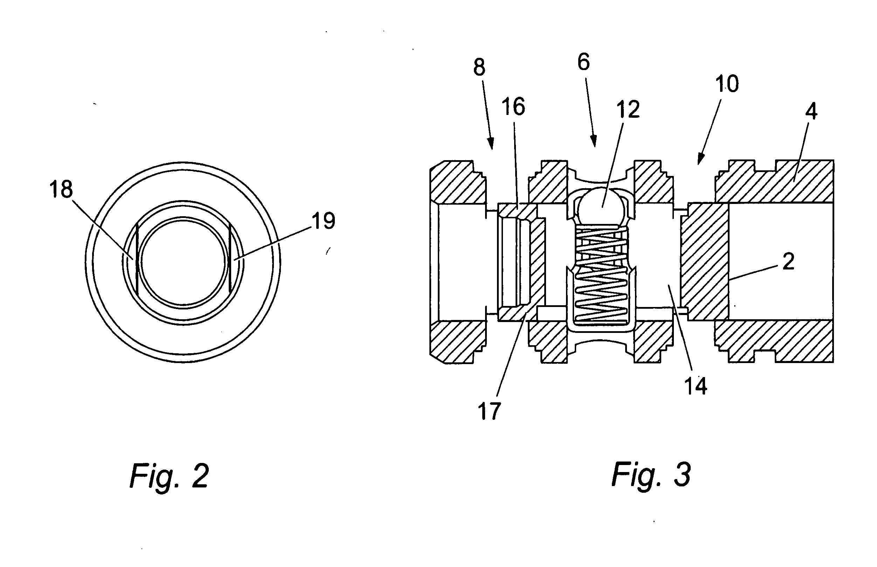

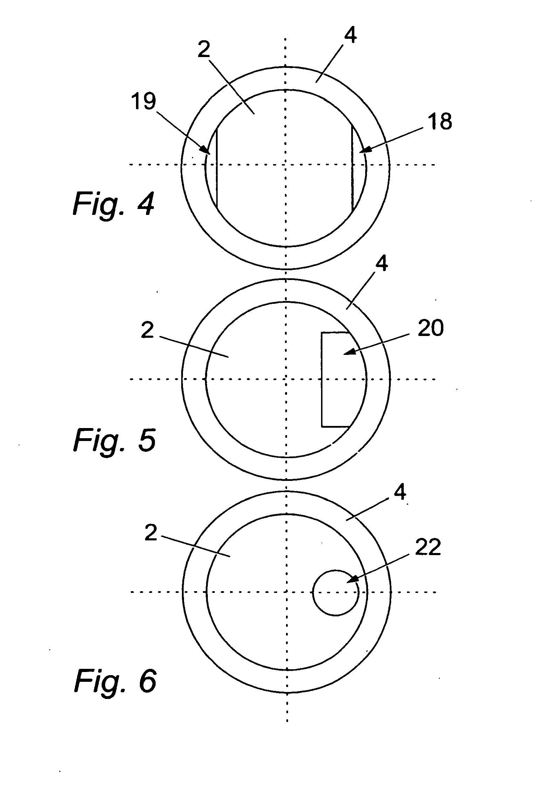

In one embodiment, illustrated in Figs. 2 and 4, the pressure balancing passage is defined by a pair of flats 18,19 provided on the outer surface of the spool on either side of the throughbore.

In a second embodiment, illustrated in Fig. 5, an elongate groove 20 is provided in the outer surface of the spool 2 on one side of the spool 2, running along the length of the spool 2.

In a third embodiment, illustrated in Fig. 6, one or more holes or elongate bores 122 extend through the length of the spool 2, to one or both sides of the throughbore 14, to provide fluid communication between the ends of the spool 2.

Because the surfaces 16,17 of the spool 2 surrounding the throughbore 14 are a tight sliding fit against the inner surfaces of the spool housing 4, the ends of the spool and the pressure balancing passageway are isolated from the high pressure fluid passing from the inlet 6 to a selected one of the outlets 8,10.

At least one end of the spool, preferably the end furthest from the actuator, is preferably connected to a drain or low pressure region such that any leakage of oil from the throughbore to the pressure balancing passage or the ends of the spool 2 can be removed.

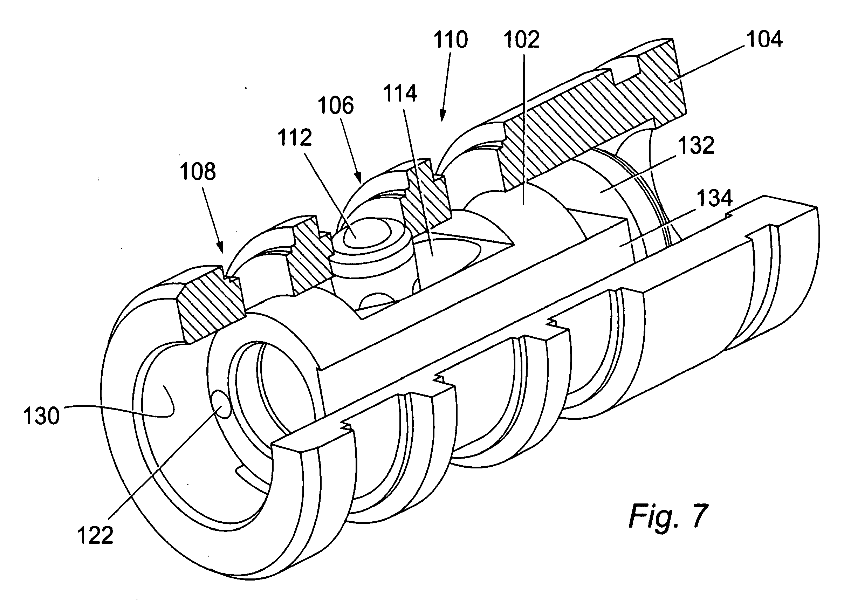

An alternative embodiment of the present invention is illustrated in Fig. 7.

The flow control valve comprises a spool 102 slidably mounted within a spool housing 104. The spool housing 104 is provided with an inlet 106 connectable to a source of high pressure oil, such as an oil pump of an engine, and first and second outlets 108,110 positioned on either side of the inlet 106 for selectively supplying oil to a cam phaser for moving the cam phaser between advanced and retarded positions, as is well known in the art.

A check valve 112 is associated with the inlet 106 and mounted within the spool housing 104 whereby the check valve 112 extends through an elongate throughbore 114 in the spool 2. The throughbore 114 is of elongated shape to permit reciprocating movement of the spool 102 within the spool housing 104 between first and second positions.

The surfaces of the spool 102 surrounding the ends of the throughbore 114 are a sliding fit against the inner surface of the spool housing 4 such that the throughbore 114 defines a fluid chamber for controlling the flow of oil from the inlet 106 to either of the first and second outlets 108,110 depending upon the position of the spool 102 within the spool housing 104.

An actuator (not shown) acts on one end of the spool 102 to selectively move the spool 102 between its first and second positions.

In order to allow free movement of the spool 102 within the spool housing 104, a pressure balancing passage 122 is provided through the length of the spool 2 to one side of the throughbore to provide fluid communication between the ends of the spool.

A first end 130 of the spool housing 104 is placed in fluid communication with a drain or low pressure region. When the spool is in its second position, such that the inlet 106 is in communication with the second outlet 110, via the throughbore 114, the first outlet 108 is uncovered by the end of the spool 102 such that the first outlet 108 is in communication with the drain or lower pressure region via the first end 130 of the spool housing.

In order to drain the second outlet 110 when the spool is in its first position (whereby the inlet 106 communicates with the first outlet 108 via the throughbore), an annular recess 132 is provided around the spool 102 adjacent an end of the spool 102 furthest from the first end 130 of the spool housing 104, an elongate slot 134 extending along a side of the spool from the annular recess to the end of the spool 102 adjacent the first end 130 of the spool housing 104 to provide fluid communication between the second outlet 110 and the drain when the spool is in its first position.

The elongate slot 134 is provided to one side of the throughbore, opposite to the pressure balancing passage 122.

While the communication between the annular recess 132 and the drain is shown as being provided by an elongate slot 134, it is envisaged that such communication may alternatively be provided by one or more holes, slots or other form of passageway. Note that such passageway does not extend between the ends of the spool 102 but only between the end of the spool adjacent the first end of the spool housing 104 and the annular recess 132.

Various modifications and variations to the described embodiments of the invention will be apparent to those skilled in the art without departing from the scope of the invention as defined in the appended claims. Although the invention has been described in connection with specific preferred embodiments, it should be understood that the invention as claimed should not be unduly limited to such specific embodiments.

## Claims

1. An oil flow control valve for a cam phaser comprising a spool (2), a spool housing (4) and a check valve (12), the spool (2) having a transverse throughbore (14), the check valve (12) being mounted in the spool housing (4) to extend through said throughbore (14), the spool throughbore (4) being of elongated shape to permit reciprocating movement of the spool (2) within the spool housing (4) between first and second positions, the spool housing (4) being provided with a fluid inlet (6), associated with the checkvalve (12), and first and second fluid outlets (8, 10) located such that the transverse throughbore (14) of the spool (2) provides fluid communication between the fluid inlet (6) and the first fluid outlet (8) when the spool (2) is in its first position and provides fluid communication between the fluid inlet (6) and the second fluid outlet (10) when the spool (2) is in its second position, **characterised in that** at least one pressure balancing channel (18, 19, 20, 22) is provided through or along the spool (2), to one side of the transverse spool throughbore (14) to provide fluid communication between opposite first and second ends of the spool (2).

2. An oil control valve as claimed in claim 1, wherein the pressure balancing channel comprises an axially extending bore (22) extending through the spool (2) between said first and second ends of the spool (2).

3. An oil control valve as claimed in claim 1, wherein the pressure balancing channel comprises one of at least one axially extending bore (22) extending through the spool (2) between said first and second ends of the spool (2); at least one elongate slot or groove (20) formed in a side region of the spool (2) to one side of the throughbore (14); and at least one flat surface (19) extending along the length of the spool (2) along one side thereof.

4. An oil control valve as claimed in any preceding claim, wherein the side faces of the spool (2) surrounding the ends of the throughbore (14) are a close sliding fit against the inner surface of the spool housing (4) whereby the throughbore (14) defines an oil chamber within which the check valve (12) is located.

5. An oil control valve as claimed in any preceding claim, wherein said first end of the spool housing communicates with a drain (130) or low pressure region, said first fluid outlet (108) being uncovered by the spool (102) to communicate with said drain (130) when the spool (102) is in its second position, a recess (132) or aperture being provided in a side region of the spool (102) for communication with said second fluid outlet (110) when the spool (102) is in its first position.

6. An oil control valve as claimed in claim 5, wherein a drain channel (134) provided in or between the spool (102) and/or the spool housing (104) to provide fluid communication between said recess (132) or aperture and said first end of the spool and hence said drain (130).

7. An oil control valve as claimed in claim 6, wherein said drain channel (134) comprises an elongate slot formed in a side face of the spool (102) to one side of the spool throughbore (114).

8. An oil control valve as claimed in claim 7, wherein said pressure balancing channel (122) is provided on an opposite side to that provided with the drain channel (134).

9. An oil control valve as claimed in claim 5, wherein a further drain passage is provided within the spool housing (104), said further drain passage communicating with the second fluid outlet (110) via said recess (132) or aperture of the spool (102) when the spool (102) is in its first position.

## Patentansprüche

1. Öldurchflusssteuerventil für einen Nockenwellenversteller, das eine Spule (2), ein Spulengehäuse (4) und ein Rückschlagventil (12) aufweist, wobei die Spule (2) eine transversale Durchbohrung (14) hat, wobei das Rückschlagventil (12) angebracht ist in dem Spulengehäuse (4), um sich durch die Durchbohrung (14) zu erstrecken, wobei die Spulen-Durchbohrung (14) eine längliche Form hat, um eine Hin- und Herbewegung der Spule (2) innerhalb des Spulengehäuses (4) zwischen ersten und zweiten Positionen zu ermöglichen, wobei das Spulengehäuse (4) vorgesehen ist mit einem Fluid-Einlass (6), der zu dem Rückschlagventil (12) gehört, und erste und zweite Fluid-Auslässe (8, 10) derart positioniert sind, dass die transversale Durchbohrung (14) der Spule (2) eine Fluid-Verbindung zwischen dem Fluid-Einlass (6) und dem ersten Fluid-Auslass (8) vorsieht, wenn die Spule (2) in ihrer ersten Position ist, und eine Fluid-Verbindung zwischen dem Fluid-Einlass (6) und dem zweiten Fluid-Auslass (10) vorsieht, wenn die Spule (2) in ihrer zweiten Position ist, **dadurch gekennzeichnet, dass** zumindest ein Druckausgleichskanal (18, 19, 20, 22) durch die oder entlang der Spule (2) vorgesehen ist zu einer Seite der transversalen Spulen-Durchbohrung (14), um eine Fluid-Verbindung zwischen gegenüberliegenden ersten und zweiten Enden der Spule (2) vorzusehen.

2. Ölsteuerventil gemäß Anspruch 1, wobei der Druckausgleichskanal eine sich axial erstreckende Bohrung (22) aufweist, die sich durch die Spule (2) zwischen den ersten und zweiten Enden der Spule (2) erstreckt.

3. Ölsteuerventil gemäß Anspruch 1, wobei der Druckausgleichskanal eines aufweist aus zumindest einer sich axial erstreckenden Bohrung (22), die sich durch die Spule (2) zwischen den ersten und zweiten Enden der Spule (2) erstreckt; zumindest einem Längsschlitz oder -einschnitt (20), der in einem Seitenbereich der Spule (2) an einer Seite der Durchbohrung (14) ausgebildet ist; und zumindest einer flachen Oberfläche (19), die sich entlang der Länge der Spule (2) entlang deren einen Seite erstreckt.

4. Ölsteuerventil gemäß einem vorhergehenden Anspruch, wobei die Seitenflächen der Spule (2), welche die Enden der Durchbohrung (14) umgeben, einen festen gleitenden Sitz gegen die innere Oberfläche des Spulengehäuses (4) haben, wodurch die Durchbohrung (14) eine Ölkammer definiert, in der sich das Rückschlagventil (12) befindet.

5. Ölsteuerventil gemäß einem vorhergehenden Anspruch, wobei das erste Ende des Spulengehäuses mit einem Abfluss (130) oder niedrigem Druck-Bereich in Verbindung steht, wobei der erste Fluid-Auslass (108) freigelegt wird durch die Spule (102), um mit dem Abfluss (130) in Verbindung zu stehen, wenn die Spule (102) in ihrer zweiten Position ist, wobei eine Aussparung (132) oder Öffnung in einem Seitenbereich der Spule (102) vorgesehen ist für eine Verbindung mit dem zweitem Fluid-Auslass (110), wenn die Spule (102) in ihrer ersten Position ist.

6. Ölsteuerventil gemäß Anspruch 5, wobei ein Abflusskanal (134) vorgesehen ist in oder zwischen der Spule (102) und/oder dem Spulengehäuse (104), um eine Fluid-Verbindung zwischen der Aussparung (132) oder Öffnung und dem ersten Ende der Spule und somit dem Abfluss (130) vorzusehen.

7. Ölsteuerventil gemäß Anspruch 6, wobei der Abflusskanal (134) einen Längsschlitz aufweist, der in einer Seitenfläche der Spule (102) an einer Seite der Spulen-Durchbohrung (114) ausgebildet ist.

8. Ölsteuerventil gemäß Anspruch 7, wobei der Druckausgleichskanal (122) auf einer gegenüberliegenden Seite zu der Seite vorgesehen ist, die mit dem Abflusskanal (134) vorgesehen ist.

9. Ölsteuerventil gemäß Anspruch 5, wobei ein weiterer Abfluss-Durchlauf in dem Spulengehäuse (104) vorgesehen ist, wobei der weitere Abfluss-Durchlauf mit dem zweiten Fluid-Auslass (110) über die Aussparung (132) oder Öffnung der Spule (102) in Verbindung steht, wenn die Spule (102) in ihrer ersten Position ist.

## Revendications

1. Soupape de contrôle de débit pour synchronisateur de phase de came, comprenant un tiroir (2), un boîtier de tiroir (4) et un clapet anti-retour (12), le tiroir (2) ayant un perçage traversant transversal (14), le clapet anti-retour (12) étant monté dans le boîtier de tiroir (4) pour s'étendre à travers ledit trou traversant (14), le trou traversant (4) du tiroir ayant une forme allongée pour permettre un mouvement de va-et-vient du tiroir (2) dans le boîtier de tiroir (4) entre une première et une seconde position, le boîtier de tiroir (4) étant pourvu d'une entrée de fluide (6), associée au clapet anti-retour (12), et d'une première et d'une seconde sortie de fluide (8, 10) situées de telle façon que le perçage traversant transversal (14) du tiroir (2) assure une communication fluidique entre l'entrée de fluide (6) et la première sortie de fluide (8) quand le tiroir (2) est dans sa première position et assure une communication fluidique entre l'entrée de fluide (6) et la seconde sortie de fluide (10) quand le tiroir (2) est dans sa seconde position, **caractérisé en ce qu'**au moins un canal d'équilibrage de pression (18, 19, 20, 22) est prévu à travers le tiroir (2) ou le long de celui-ci, vers un côté du perçage traversant transversal (14) du tiroir pour assurer une communication fluidique entre une première et une seconde extrémité opposées du tiroir (2).

2. Soupape de contrôle de débit selon la revendication 1, dans laquelle le canal d'équilibrage de pression comprend un perçage axial (22) s'étendant à travers le tiroir (2) entre ladite première extrémité et ladite seconde extrémité du tiroir (2).

3. Soupape de contrôle de débit selon la revendication 1, dans laquelle le canal d'équilibrage de pression comprend au moins un perçage axial (22) s'étendant à travers le tiroir (2) entre ladite première et ladite seconde extrémité du tiroir (2) ; au moins une fente ou une gorge allongée (20) formée dans une région latérale du tiroir (2) vers un côté du perçage traversant (14) ; et au moins une surface plane (19) s'étendant le long de la longueur du tiroir (2) le long d'un côté de celui-ci.

4. Soupape de contrôle de débit selon l'une quelconque des revendications précédentes, dans laquelle les faces latérales du tiroir (2) qui entourent les extrémités du perçage traversant (14) sont en contact de coulissement intime contre la surface intérieure du boîtier de tiroir (4), grâce à quoi le perçage traversant (14) définit une chambre à huile à l'intérieur de laquelle est placé le clapet anti-retour (12).

5. Soupape de contrôle de débit selon l'une quelconque des revendications précédentes, dans laquelle ladite première extrémité du boîtier de tiroir communique avec un drain (130) ou une région à basse pression, ladite première sortie de fluide (108) étant découverte par le tiroir (102) pour communiquer avec ledit drain (130) quand le tiroir (102) est dans sa seconde position, un évidement (132) ou une ouverture étant prévue dans une région latérale du tiroir (102) pour communiquer avec ladite seconde sortie de fluide (110) quand le tiroir (102) est dans sa première position.

6. Soupape de contrôle de débit selon la revendication 5, dans laquelle un canal de drain (134) est prévu dans ou entre le tiroir (102) et/ou le boîtier de tiroir (104) pour assurer une communication fluidique entre ledit évidement (132) ou ladite ouverture et ladite première extrémité du tiroir et donc ledit drain (130).

7. Soupape de contrôle de débit selon la revendication 6, dans laquelle ledit canal de drain (134) comprend une fente allongée formée dans une face latérale du tiroir (102) vers un côté du perçage traversant (114) du tiroir.

8. Soupape de contrôle de débit selon la revendication 7, dans lequel ledit canal d'équilibrage de pression (122) est prévu sur un côté opposé à celui pourvu du canal de drain (134).

9. Soupape de contrôle de débit selon la revendication 5, dans laquelle un autre passage de drain est prévu dans le boîtier de tiroir (104), ledit autre passage de drain communiquant avec la seconde sortie de fluide (110) via ledit évidement (132) ou ladite ouverture du tiroir (102) quand le tiroir (102) est dans sa première position.
